(19) Europäisches Patentamt
European Patent Office
Office européen des brevets

(11) **EP 3 379 463 A1**

(12) **EUROPEAN PATENT APPLICATION**

(43) Date of publication:
**26.09.2018 Bulletin 2018/39**

(51) Int Cl.:
***G06N 3/08*** *(2006.01)*          ***G06N 3/04*** *(2006.01)*

(21) Application number: **17162939.7**

(22) Date of filing: **24.03.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Crowdbanker A/S
1104 Copenhagen K (DK)**

(72) Inventors:
• **FRANCKE, Mathias Brædder
2830 Virum (DK)**
• **KJÆRSGAARD-RASMUSSEN, Jimmy
3460 Birkerød (DK)**

(74) Representative: **Zacco Denmark A/S
Arne Jacobsens Allé 15
2300 Copenhagen S (DK)**

(54) **TRAINING OF A LEARNING-CAPABLE SYSTEM**

(57)      Disclosed is a learning-capable system and an associated method for training a learning-capable system configured for selecting one or more actions from a set of possible actions based on a model outcome of a dynamic prediction model comprising a plurality of model coefficients, wherein the model outcome is indicative of a probability score associated with the set of possible actions.

100

Fig. 1

**Description**

The present disclosure relates to a learning-capable system, such as a system utilising machine learning. More particular the present disclosure relates to training of a system, such as a system for decision making in situations wherein the decision is made from a set of possible options.

BACKGROUND

Learning-capable systems, such as neural networks, have become increasingly popular in automatically determining whether criterias are fulfilled, e.g. does a picture show a picture of a certain object, and/or to automatically perform certain actions, such as translating text between different languages. Learning-capable systems may also be used in decision making, such as to provide propabilities related to whether an option would be a preferred option.

In order to get a functioning learning-capable system, the learning-capable system must be trained in order to learn what is more likely to be the best outcome. For example, a learning-capable system may be trained by comparing a lot of (human) translations in order to detect patterns that will help decide what is likely to be the best translation of a given sentence.

The outcome of a learning-capable system may be a set of numbers indicating the degree of affiliation to a set of predetermined classes. Alternatively, the outcome of a learning-capable system may be continuous, e.g. the learning-capable system may estimate a value of a continuous variable. In such situations, the error between the learning-capable system and the desired outcome may be quantified.

Performance of the learning-capable system is usually measured as a loss value. A loss value is usually determined based on a distance between the outcome and the target. Training then means any processes of minimising the loss value. To train the learning-capable system the parameters of the learning-capable system may be adjusted in order to optimize the loss value, such as minimising the loss value, i.e. minimising how wrong the learning-capable system is.

When the learning-capable system estimates the value of a continuous data variable, it would be expected that the difference between the outcome of the learning-capable system and the correct outcome, e.g. the target value" would be included in calculating the loss value, e.g. the loss value could be calculated as the mean of squared errors. More generally the loss function, when the estimate is of a continuous variable, is of the form:

$$L = f(\tilde{r}, r),$$

wherein $\tilde{r}$ is the estimated value, and r is the correct outcome.

When the learning-capable system is used as a classifier, a typical loss function could be cross entropy or alternatively mean classification accuracy, such as the mean number of wrong estimates. More generally the loss function, when the estimate is a class affiliation vector, is of the form:

$$L = f(\tilde{p}, p),$$

Wherein $\tilde{p}$ is the estimated affiliation to the set of predetermined classes, and p is the correct affiliation.

In some cases, the outcome of the learning-capable system may be a classifier, e.g. yes or no, but the answer might be associated with a quantifiable consequence, i.e. what is the consequence of a wrong answer and/or the consequence of a correct answer. If training such learning-capable system with a loss function of a classifier, valuable information will not be taken into account. If on the other hand training such learning-capable system with a loss function of a regressor, the model is trying to predict more than needed.

SUMMARY

Despite the known solutions there is a need for an improved scheme for training a learning-capable system, such as a neural network. In particular, a training scheme suitable for training a learning-capable system for cases where the output is a classifier associated with a quantifiable consequence.

Accordingly, a method, such as computer implemented method, is provided, such as a method for training a learning-capable system, such as a system configured for selecting one or more actions from a set of possible actions based on a model outcome of a dynamic prediction model. The dynamic prediction model comprises a plurality of model coefficients. The model outcome is indicative of a probability score associated with the set of possible actions.

The system may be configured for advising to select one or more actions from the set of possible actions based on the model outcome of the dynamic prediction model.

The method comprises: obtaining the dynamic prediction model; obtaining a first data set comprising a plurality of first data pairs; for each of the first data pairs: calculating an estimated outcome; determining a loss value; and modifying the learning-capable system.

The first data set comprises a plurality of first data pairs. Each of the first data pairs comprises a plurality of feature data and a target data. The target data represents a continuous variable, e.g. the target data may comprise at least one real number.

Calculating the estimated outcome, e.g. corresponding to the target data, is based on the dynamic prediction model and the plurality of feature data. The estimated outcome is indicative of an estimated probability score associated with the set of possible actions.

Determining the loss value is based on the target data and the estimated outcome of each of the first data pairs.

Modifying the learning-capable system is performed by adjusting the dynamic prediction model such that the loss value is optimized, such as minimized.

Also disclosed is a method, such as computer implemented method, for selecting one or more actions from a set of possible actions. The method comprises the steps of: obtaining a learning-capable system trained in accordance with the method as disclosed above; obtaining an input data set comprising a plurality of input data; determining the model outcome based on the dynamic prediction model and the plurality of input data of the input data set; and selecting one or more actions from the set of possible actions based on the model outcome.

Also disclosed is a method, such as computer implemented method, for advising to select one or more actions from a set of possible actions. The method comprises the steps of: obtaining a learning-capable system trained in accordance with the method as disclosed above; obtaining an input data set comprising a plurality of input data; determining the model outcome based on the dynamic prediction model and the plurality of input data of the input data set; and advising to select one or more actions from the set of possible actions based on the model outcome.

Also disclosed is a learning-capable system, such as a system configured to select an action from a set of possible actions. The system comprises a processing unit configured to: obtain a dynamic prediction model; obtain a first data set comprising a plurality of first data pairs; for each of the first data pairs: calculate an estimated outcome; determine a loss value; and modify the learning-capable system.

The first data set comprises a plurality of first data pairs. Each of the first data pairs comprises a plurality of feature data and a target data. The target data represents a continuous variable, e.g. the target data may comprise at least one real number Calculating the estimated outcome, e.g. corresponding to the target data, is based on the dynamic prediction model and the plurality of feature data. The estimated outcome is indicative of an estimated probability score associated with the set of possible actions.

Determining the loss value is based on the target data and the estimated outcome of each of the first data pairs.

Modifying the learning-capable system is performed by adjusting the dynamic prediction model such that the loss value is optimized, such as minimized.

The processing unit is further configured to: obtain an input data set; determine a model outcome; select a selected action; and output the selected action.

The input data set comprises a plurality of input data.

Determination of the model outcome is based on the dynamic prediction model and the plurality of input data. The model outcome is indicative of a probability score associated with the set of possible actions.

The selected action may be selected from the set of possible actions based on the model outcome.

The system may be configured to advise to select one or more actions from the set of possible actions. The advise may be based on the model outcome.

It is an advantage of the present disclosure that a method and a system is provided, which may assist in making decisions. In particular, the present disclosure provides a method and a system, which may assist in making decisions, in situations where the data, used as basis for the decision, comprises a high degree of noise, such as random variation, as compared to the structure of the data. The data may be historical data.

It is a further advantage of the present disclosure that it may provide a traning scheme where the learning-capable system is faster in converging to a high degree of optimal decisions, e.g. as compared to a training scheme where the learning-capable system is trying to predict the magnitude of the target value.

It is a further advantage of the present disclosure that a training scheme is provided that is especially suitable in an environment where training data is associated with a high degree of noise as compared to the degree of structure in the data.

It is envisaged that any embodiments or elements as described in connection with any one aspect may be used with any other aspects or embodiments, mutatis mutandis.

The model outcome may be indicative of a probability associated with one or more of the actions of the set of possible actions, such as a probability of one or more of the actions, such as each action, being the best action to select, e.g. in order to maximize a reward. For example, the model outcome may be a vector of probabilities, e.g. comprising probabilities associated with each of the actions of the set of possible actions.

The loss value may be a function of the estimated outcome, e.g. probabilities, and the target data representing a continuous variable. The loss value may be calculated by a function of the form:

$$L = f(\tilde{p}, r)$$

where $\tilde{p}$ is the estimated outcome, and r is the target data. Thus, the loss value may take into account the estimated outcome indicative of the probability of affiliation with a set of predetermined classes and the target data representing a continuous variable.

The magnitude of the loss value may be influenced by the magnitude of the target data of each of the first data pairs. The magnitude of the loss value may be mainly influenced by the magnitude of the target data of each of the first data pairs. The loss value may be based on a multiplication of the target data and the estimated outcome of each of the first data pairs. The loss value may be based on a summation of the target data and the estimated outcome of each of the first data pairs. The loss value may be calculated as:

$$L = -\sum_i \tilde{p}_i r_i$$

where $\tilde{p}_i$ is the estimated outcome for the i'th first data pair of the plurality of first data pairs, and $r_i$ is the target data for the i'th first data pair of the plurality of first data pairs.

Obtaining the dynamic prediction model may comprise assigning random or pseudo random values to each of the plurality of model coefficients. Alternatively or additionally, obtaining the dynamic prediction model may comprise obtaining an adjusted prediction model. The adjusted prediction model may be a result of training another learning-capable system.

The dynamic prediction model may be a neural network comprising a plurality of nodes. Each node may be defined by the model coefficients. The model coefficients may comprise weights and/or the model coefficients may comprise biases.

The set of possible actions may be non-ordered. The set of possible actions may comprise mutually exclusive actions. The set of possible actions may comprise non-mutually exclusive actions.

The plurality of feature data may comprise classification data and/or continuous data, e.g. describing discrete and/or continuous variables. The plurality of feature data may comprise time series. The plurality of feature data may comprise data points sampled regularly, such as equally separated in time. For example, the data points may be hourly data points or daily data points, such as from the same time a day. The plurality of feature data may comprise data points sampled irregularly.

The plurality of feature data may comprise historical values of a first variable, such as from a first initial time to a first final time. The plurality of feature data may comprise historical values of a second variable, such as from a second initial time to a second final time. The plurality of feature data may comprise values of a plurality of variables including the first variable and/or the second variable. The values of the plurality of variables may be historical values, such as historical values from an initial time to a final time.

The target data may comprise a value indicative of the value of the first variable at a first target time, such as a first target time after the first final time and/or after the second final time. The target data may comprise a value indicative of the value of the second variable at a second target time, such as after the first final time and/or after the second final time. The target data may comprise a plurality of values, e.g. indicative of values of a plurality of variables at a target time after the final time. The plurality of variables may include the first variable and/or the second variable.

The feature data may comprise information of one variable, and the target data may comprise information of another variable. For example, the plurality of feature data may comprise historical values of the first variable, such as from the first initial time to the first final time. The target data may comprise a value indicative of the value of the second variable at the second target time after the first final time.

Selecting one or more actions from the set of possible actions may comprise selecting the action being associated with the highest probability by the model outcome.

The set of possible actions may comprise a first action and a second action. Selecting one or more actions from the set of possible actions may comprise selecting the first action if the model outcome indicative of the probability associated with the first action is higher than the model outcome indicative of the probability associated with the second action. The set of possible actions may comprise a plurality of actions comprising the first action and the second action. Selecting one or more actions may comprise allocating resources to one or more actions based on the model outcome, such as proportional to the model outcome.

The learning-capable system may comprise a display connected to the processing unit. The processing unit may be configured to output the selected action to the display. The display may be configured to display an indication of the selected action.

The processing unit may be configured to perform the selected action.

The processing unit may be configured to output the selected action to a system, such as a system configured to perform the selected action.

The present disclosure may in particular be useful for providing forecasts in the financial markets. The set of possible actions may comprise buying or selling one or more predetermined financial objects. The model outcome may be indicative of a probability score associated with maximising reward of buying or selling the one or more predetermined financial objects. For example, the model outcome may be indicative of a probability score associated with the one or more predetermined financial objects increasing or decreasing their value.

BRIEF DESCRIPTION OF THE DRAWINGS

The above and other features and advantages of the present invention will become readily apparent to those skilled in the art by the following detailed description of exemplary embodiments thereof with reference to the attached drawings, in which:

Fig. 1   illustrates a flowchart of an exemplary method for training a learning-capable system,
Fig. 2   illustrates a flowchart of an exemplary method for selecting one or more actions,
Fig. 3   illustrates a flowchart of an exemplary method,
Fig. 4   schematically illustrates an exemplary learning-capable system, and
Fig. 5   illustrates an exemplary schematic of a method.

DETAILED DESCRIPTION

Various embodiments are described hereinafter with reference to the figures. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

Throughout, the same reference numerals are used for identical or corresponding parts.

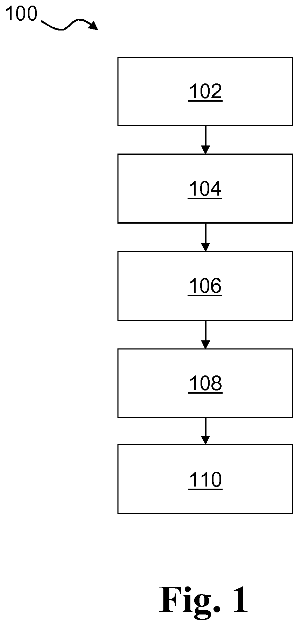

Fig. 1 illustrates a flowchart of an exemplary method 100 for training a learning-capable system, such as a learning-capable system configured for selecting one or more actions from a set of possible actions. The set of possible actions may comprise mutually exclusive actions, such as answer yes or no, go right, straight, left, or backwards, buy or sell. Alternatively, the set of possible actions may comprise non mutually exclusive actions, such as buy stock 1 and/or buy stock 2.

The selection of the action by the learning-capable system is based on a model outcome of a dynamic prediction model. The dynamic prediction model comprises a plurality of model coefficients. For example, the dynamic prediction model may be a neural network comprising a plurality of nodes. Each node may be defined by the model coefficients. The model coefficients may comprise weights and biases for nodes in a neural network.

The model outcome may be indicative of a probability score associated with the set of possible actions. For example, the model outcome may be indicative of the probability, such as the probability estimated by the dynamic prediction model, of achieving the best result by performing each action of the set of possible actions. For example, in an example wherein the set of possible actions comprises three actions A, B and C, the model outcome may be indicative of an estimated probability of action A being the best action to take, an estimated probability of action B being the best action to take, and an estimated probability of action C being the best action to take. The estimated probabilities of each action may designate the probability of maximising a reward by performing each action of the set of possible actions. For example, the model outcome being indicative of an estimated probability of action A being the best action to take may indicate the probability of, that performing action A will maximize the reward.

The method 100 comprises: Obtaining 102 the dynamic prediction model; obtaining 104 a first data set; calculating 106 an estimated outcome; determining 108 a loss value; and modifying 110 the learning-capable system.

Obtaining 102 the dynamic prediction model may comprise defining a topology of the dynamic prediction model. Obtaining 102 the dynamic prediction model may comprise assigning initial values, such as random values or pseudo random values, to the plurality of model coefficients, such as to each of the plurality of model coefficients. Alternatively, obtaining 102 the dynamic prediction model may comprise obtaining an adjusted prediction model, such as an adjusted prediction model being a result of training another learning-capable system and/or a result of previous training of the same learning-capable system.

After obtaining 102 the dynamic prediction model, a first data set is obtained 104. In an alternative example (not shown), obtaining 104 the first data set may be performed prior to obtaining 102 the dynamic prediction model. In a further example obtaining 104 the first data set may be performed simultaneous with obtaining 102 the dynamic prediction model. The first data set comprises a plurality of first data pairs. Each of the first data pairs comprises a plurality of feature data and a target data. The target data represents a continuous variable, e.g. the target data may comprise one or more real numbers, such as a vector of real numbers, each of the real numbers may describe a continuous variable. The target data is not classification data.

The plurality of feature data may comprise classification data and continuous data describing discrete and/or continuous variables. For example, the plurality of feature data may comprise data points equally separated in time, such as a time series. Alternatively or additionally, the plurality of feature data may comprise classification data, such as one or more single indicators, such as one or more bolean variables, e.g. describing if a predetermined criterion is met or not.

In an example, the plurality of feature data of a first data pair may comprise historical values of a first variable from a first initial time to a first final time, such as historical values of stock prices of a certain stock in a certain time period. The target data of the first data pair may comprise a value indicative of the first variable at a first target time after the first final time, such as the value of the stock price of the certain stock after the end of the time period. For example, the target data of the first data pair may comprise the value of the stock price of the certain stock at the first target time.

Alternatively or additionally, the target data of the first data pair may comprise a relative change, e.g. a percentage change, of the stock price of the certain stock at the first target time relative to the stock price of the certain stock at the first final time.

Additionally, the plurality of feature data of the first data pair may comprise historical values of a second variable from a second initial time to a second final time, such as historical values of stock prices of another stock in another or the same time period. The target data of the first data pair may comprise a value indicative of the second variable at a second target time after the second final time, such as the value of the stock price of the other stock after the end of the time period.

In the example wherein the plurality of feature data of the first data pair comprises historical values of the first variable and historical values of a second variable, the target data of the first data pair may comprise only a value indicative of the first variable at the first target time. Alternatively, the target data of the first data pair may comprise both a value indicative of the first variable at the first target time and a value indicative of the second variable at the second target time.

After obtaining 104 the first data set, estimated outcomes are calculated 106 for each of the first data pairs. The estimated outcome is calculated 106 based on the dynamic prediction model and the plurality of feature data. For example, the feature data is fed into the dynamic prediction model, and the result of the dynamic prediction model is the estimated outcome. The estimated outcome is indicative of an estimated probability score associated with the set of possible actions.

After calculating 106 the estimated outcomes for each of the first data pairs, a loss value is determined 108. The loss value is determined 108 based on the target data and the estimated outcome of each of the first data pairs. For example, the target data comprises information indicative of the consequence associated with performing each of the possible actions, and the estimated outcome is indicative of probability scores, as determined by the dynamic prediction model, of each of the possible actions.

For each of the first data pairs, the magnitude of the loss value may be influenced by the magnitude of the target data. For example, the magnitude of the contribution on the loss value may be high when the estimated outcome is high and the magnitude of the respective target data is high. For example, the magnitude of the contribution on the loss value may be low when the respective target data is low and/or the estimated outcome is low.

For each of the first data pairs, the contribution on the loss value may for example be the product of the probability scores (the estimated outcomes) with their respective consequence (the target data).

The loss value may be based on a summation of contributions on the loss value for each of the first data pairs.

An exemplary calculation of the loss value may be:

$$L = - \sum_i p_i r_i$$

Wherein $p_i$ is the estimated outcome for the $i$'th first data pair of the plurality of first data pairs, and $r_i$ is the target data for the $i$'th first data pair of the plurality of first data pairs.

In an example, the set of possible actions may comprise two actions, such as yes/no, up/down, buy/sell, do/don't, etc. The target data may comprise information indicative of the consequence related to one of the actions, such as the profit/loss faced if buying. The target data represents a continuous variable, e.g. the target data may be a real number. The model outcome and/or the estimated outcome may be indicative of the probability, as determined by the dynamic prediction model, that the price will rise or fall, i.e. that it will be wise to buy or sell. For example, the model outcome may be expressed as probabilities of the price going up or down. The model outcome may be expressed as a single probability, such as the probability associated with one action. The probability associated with the other action may be calculated since the two probabilities has to sum to one. Alternatively, the model outcome may be expressed as a single value being the difference between the two probabilities, e.g. the model outcome may be negative if one action is more likely to be the best, and positive if the other action is more likely to be the best. The model outcome may be between -1 and +1.

In an example of one first data pair, wherein the set of possible actions comprise two actions, the contribution on the loss value for the first data pair wherein the target data is +100 associated with a first action, such as buying, and the estimated outcome is 0.7 in favour of buying and 0.3 in favour of selling, may be calculated as

$$-(0.7 \cdot 100 - 0.3 \cdot 100) = -(0.4 \cdot 100) = -40,$$

i.e. the loss is reduced.

The magnitude of the contribution is mainly impacted by the target data. Thus, in an example of another first data pair, wherein the set of possible actions comprise two actions, the target data may be +5 associated with a first action, such as buying, and the estimated outcome may be 0.9 in favour of buying and 0.1 in favour of selling. The contribution on loss value for this first data pair may be calculated as

$$-(0.9 \cdot 5 - 0.1 \cdot 5) = -(0.8 \cdot 5) = -4.$$

In this case, the estimated outcome is more certain on the best action, but since the consequence of taking this action is small compared to the first example, the contribution on the loss value is smaller.

In a third example of a first data pair, wherein the set of possible actions comprise two actions, the contribution on the loss value for the first data pair wherein the target data is -100 associated with a first action, such as buying, and the estimated outcome is 0.6 in favour of buying and 0.4 in favour of selling, may be calculated as

$$-(0.6 \cdot -100 - 0.4 \cdot -100) = -(0.2 \cdot -100) = 20,$$

i.e. the loss is increased.

After determining 108 the loss value, the learning-capable system is modified 110.

Modification 110 of the learning-capable system is done by adjusting the dynamic prediction model, such as adjusting the model coefficients, such that the loss value is optimized, such as minimized. For example, the learning-capable system may be modified 110 by adjusting the model coefficients of the dynamic prediction model by stochastic gradient descent. Alternatively, the model coefficients may be assigned randomly a number of times, and for each time the loss value may be determined, the model coefficients giving the lowest loss may be preserved.

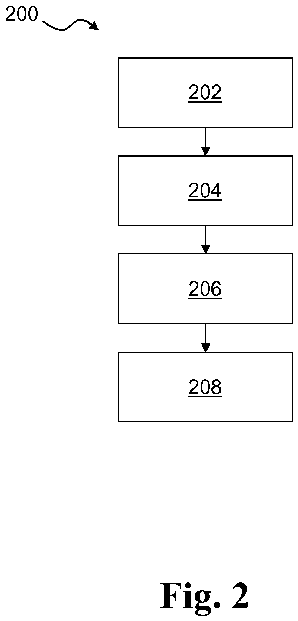

Fig. 2 illustrates a flowchart of an exemplary method 200 for selecting one or more actions. Such as selecting one or more actions from a set of possible actions. The set of possible actions may comprise mutually exclusive or opposite actions, such as answer yes or no, go right, straight, left, or backwards, buy or sell. The set of possible actions may comprise non-exclusive actions.

The method 200 comprises: Obtaining 202 a learning-capable system; obtaining 204 an input data set; determining 206 a model outcome; and selecting 208 one or more actions.

Obtaining 202 the learning-capable system may comprise obtaining a learning-capable system trained in accordance with a method for training a learning-capable system, such as the method 100 as described in relation to Fig. 1. Hence, obtaining 202 the learning-capable system may comprise executing the method 100 as described above. Obtaining 202 the learning-capable system may comprise obtaining 102 the dynamic prediction model; obtaining 104 a first data set; calculating 106 an estimated outcome; determining 108 a loss value; and modifying 110 the learning-capable system.

After obtaining 202 the learning-capable system, an input data set is obtained 204. The input data set comprises a plurality of input data. The plurality of input data may be corresponding to the plurality of feature data as explained above in relation to the method 100 for training the learning-capable system. For example, the plurality of input data may comprise the same type of information as the plurality of feature data of the plurality of first data pairs.

After obtaining 204 the input data set, a model outcome is determined 206. The model outcome is based on the dynamic prediction model of the learning-capable system, and the plurality of input data. For example, the plurality of input data is fed as an input to the dynamic prediction model, and the dynamic prediction model provides a model outcome based on the plurality of input data. The model outcome is indicative of an estimated probability score associated with the set of possible actions.

After determining 206 the model outcome, an action of the set of possible actions is selected 208. For example, selecting 208 one or more actions may comprise selecting the action being associated with the highest probability and/or selecting 208 an action may comprise selecting the action being associated with the highest expected reward. Alternatively or additionally, a more complex selection strategy may be utilized. For example, selecting 208 may comprise selecting action A if the probability associated with action A is above 0.7, selecting action B if the probability associated with action B is above 0.5, selecting option C if neither the probability associated with action A is above 0.7 nor the probability associated with action B is above 0.5.

In a further alternative, selecting 208 one or more actions may comprise allocating resources, e.g. to every action, based on the model outcome, such as proportional to the model outcome. For example, if the estimated probability associated with action A is 0.7, and the estimated probability asscociated with action B is 0.3, 70 % of the available resources may be allocated to action A, and 30 % of the available resources may be allocated to action B.

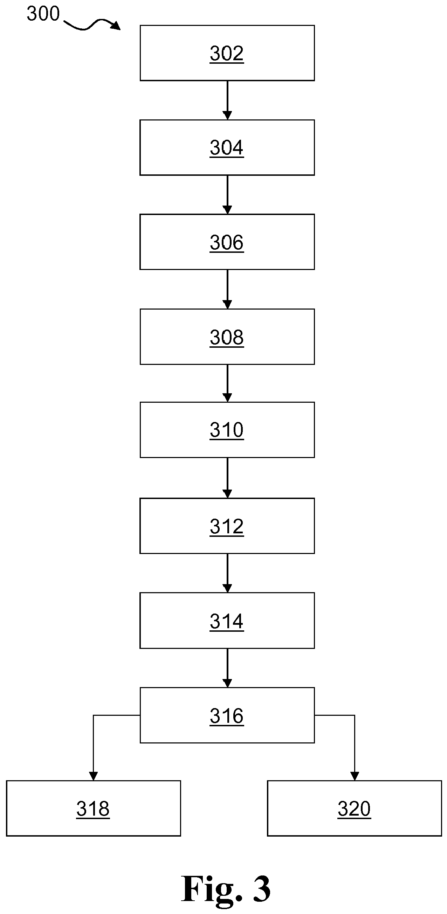

Fig. 3 illustrates a flowchart of an exemplary method 300. The exemplary method 300 combines the concepts as described in relation to Figs. 1-2.

The method 300 comprises: obtaining 302 a dynamic prediction model; obtaining 304 a first data set; calculating 306 an estimated outcome; determining 308 a loss value; modifying 310 the learning-capable system; obtaining 312 an input data set; determining 314 a model outcome; selecting 316 one or more selected action; and optionally outputting 318 the selected action and/or performing 320 the selected action.

Obtaining 302 a dynamic prediction model, may comprise obtaining 302 a dynamic prediction model comprising a plurality of model coefficients. Obtaining 302 a dynamic prediction model of the method 300 may be comparable and comprise the same features as obtaining 102 a dynamic prediction model of the method 100.

Obtaining 304 a first data set may comprise obtaining 304 a first data set comprising a plurality of first data pairs, wherein each first data pair comprises a plurality of feature data and a target data. The target data represents a continuous variable, e.g. the target data may comprise a real number, such as a vector of real numbers. The target data is not classification data. Obtaining 304 a first data set of the method 300 may be comparable and comprise the same features as obtaining 104 a first data set of the method 100.

Calculating 306 an estimated outcome may be based on the dynamic prediction model and the plurality of feature data. Calculating 306 an estimated outcome is performed for each of the first data pairs. The estimated outcome is indicative of an estimated probability score associated with the set of possible actions. Calculating 306 an estimated outcome of the method 300 may be comparable and comprise the same features as calculating 106 an estimated outcome of the method 100.

Determining 308 a loss value may be based on the target data and the estimated outcome of each of the first data pairs. Determining 308 a loss value of the method 300 may be comparable and comprise the same features as determining 108 a loss value of the method 100.

Modifying 310 the learning-capable system may comprise adjustment of the dynamic prediction models such that the loss value is minimized. Modifying 310 the learning-capable system of the method 300 may be comparable and comprise the same features as modifying 110 the learning-capable system of the method 100.

Obtaining 312 an input data set may comprise obtaining 312 an input data set comprising a plurality of input data. Obtaining 312 an input data set of the method 300 may be comparable and comprise the same features as obtaining 204 an input data set of the method 200.

Determining 314 a model outcome may be based on the dynamic prediction model and the plurality of input data. For example, the model outcome may be indicative of a probability score associated with the set of possible actions. Determining 314 a model outcome of the method 300 may be comparable and comprise the same features as determining 206 a model outcome of the method 200.

Selecting 316 one or more selected action may comprise selecting 316 a selected action from the set of possible actions based on the model outcome. Selecting 316 one or more selected action of the method 300 may be comparable and comprise the same features as selecting 208 one or more actions of the method 200.

The selected action may be outputted 318. Outputting 318 the selected action may comprise outputting 318 the selected action to a display, such as a display of the learning-capable system. Alternatively or additionally, outputting 318 the selected action may comprise outputting 318 the selected action to a system configured to perform the selected action. The selected action may be performed 320. Performing 320 the selected action may comprise the learning-capable system performing 320 the selected action.

The method 300 may be performed by a processing unit of a system, such as a learning-capable system.

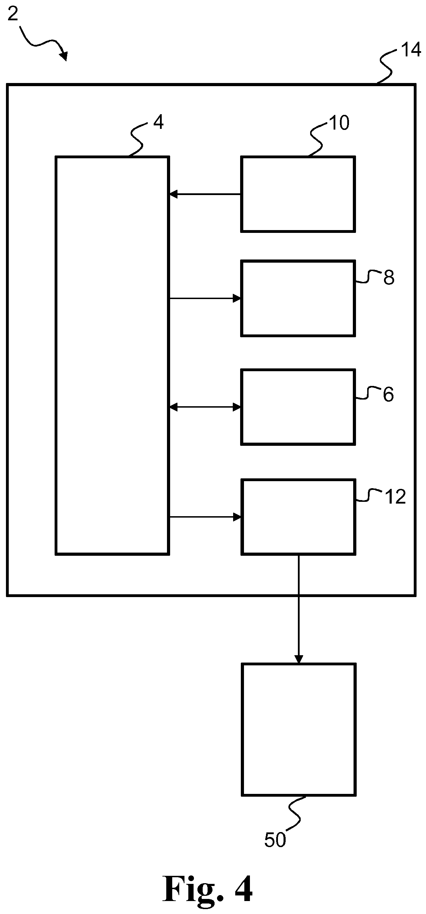

Fig. 4 schematically illustrates an exemplary learning-capable system 2. The learning-capable system 2 comprises a processing unit 4 and a memory 6. The learning-capable system 2 further may comprise one or more of a display 8, an input 10, an output 12 and a housing 14.

The processing unit 4 is connected to the memory 6 in order to store and retrieve data to/from the memory 6. The processing unit 4 is connected to the display 8 in order to output visible information via the display 8. The processing unit 4 is connected to the input 10 in order to retrieve data via the input 10. The processing unit 4 is connected to the output 12 in order to transmit data via the output 12.

The housing 14 may optionally enclose the components of the learning-capable system. However, alternatively, the components of the learning-capable system may be distributed in more than one housing.

The learning-capable system 2 is configured to perform one or more of the methods 100, 200, 300. For example, the learning-capable system 2 may be configured to perform the method 300 as described in relation to Fig. 3. The processing unit 4 may be configured to perform one or more of the steps of one or more of the methods 100, 200, 300.

The processing unit 4 may be configured to: obtain 102; 302 a dynamic prediction model, e.g. via the input 10 and/or from the memory 6; obtain 104; 304 a first data set, e.g. via the input 10 and/or from the memory 6; calculate 106; 306 an estimated outcome; determine 108; 308 a loss value; and modify 110; 310 the learning-capable system.

The processing unit 4 may be configured to: obtain 204; 312 an input data set, e.g. via the input 10 and/or from the memory 6; determine 206; 314 a model outcome; selecting 208; 316 one or more selected action.

The processing unit 4 may be configured to output 318 the selected action, e.g. via the output 12 and/or via the display 8. The processing unit 4 may be configured to output 318 the selected action, e.g. via the output 12, to a system 50, such as a system configured to perform the selected action.

The processing unit 4 may be configured to perform 320 the selected action.

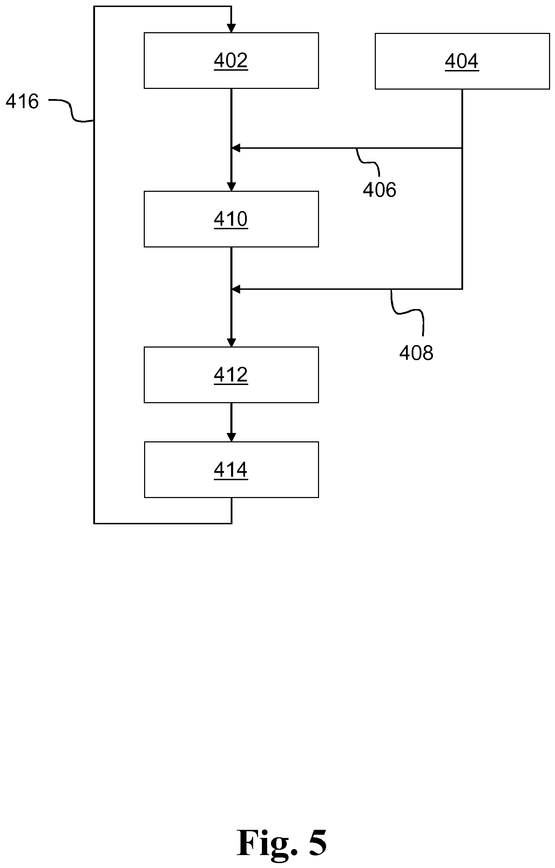

Fig. 5 shows an exemplary schematic of a method, such as the method 100 as described in relation to Fig. 1.

The starting point is that a dynamic prediction model 402 has been obtained. And a first data set 404 has been obtained. The first data set 404 comprises a plurality of first data pairs each comprising feature data 406 and target data 408.

An estimated outcome 410 is calculated for each of the first data pairs, based on the feature data 406 and the dynamic prediction model 402. For example, the estimated outcome 410 is the result of the feature data 406 used as input data for the dynamic prediction model.

A loss value 412 is determined based on the estimated outcome 410, and the target data 408 for each of the first data pairs of the first data set. For example, a consequence of the estimated outcome 410 based on the target data is used in determining the loss value 412.

The loss value is optimized 414, e.g. it is determined what adjustments may be made to the dynamic prediction model in order to retrieve a better result, e.g. a lower loss value 412. The dynamic prediction model is adjusted 416 accordingly.

The method may be performed again with the same first data input 404 and the updated dynamic prediction model 402, in order to further optimize 414 the loss value by further adjusting 416 the dynamic prediction model 402.

The method may be performed until a stop criterion is met, e.g. until the adjustment 416 of the dynamic prediction model 402 no longer results in the loss value 412 being optimized, or the optimization achieved is below a certain threshold.

Although particular features have been shown and described, it will be understood that they are not intended to limit the claimed invention, and it will be made obvious to those skilled in the art that various changes and modifications may be made without departing from the spirit and scope of the claimed invention. The specification and drawings are, accordingly to be regarded in an illustrative rather than restrictive sense. The claimed invention is intended to cover all alternatives, modifications and equivalents.

LIST OF REFERENCES

| | |
|---|---|
| 2 | learning-capable system |
| 4 | processing unit |
| 6 | memory |
| 8 | display |
| 10 | input |
| 12 | output |
| 14 | housing |
| 50 | system configured to perform a selected action |
| 100 | method |
| 102; 302 | obtaining the dynamic prediction model |
| 104; 304 | obtaining a first data set |
| 106; 306 | calculating an estimated outcome |
| 108; 308 | determining a loss value |
| 110; 310 | modifying the learning-capable system |
| 200 | method |

| 202 | obtaining a learning-capable system |
|-----|--------------------------------------|
| 204; 312 | obtaining an input data set |
| 206; 314 | determining a model outcome |
| 208; 316 | selecting one or more actions |
| 300 | method |
| 318 | outputting the selected action |
| 320 | performing the selected action |
| 402 | dynamic prediction model |
| 404 | first data set |
| 406 | feature data |
| 408 | target data |
| 410 | estimated outcome |
| 412 | loss value |
| 414 | loss value optimization |
| 416 | adjustment of the dynamic prediction model |

**Claims**

1. Method for training a learning-capable system configured for selecting one or more actions from a set of possible actions based on a model outcome of a dynamic prediction model comprising a plurality of model coefficients, wherein the model outcome is indicative of a probability score associated with the set of possible actions, the method comprising:

   - obtaining the dynamic prediction model;
   - obtaining a first data set, the first data set comprising a plurality of first data pairs, each of the first data pairs comprising a plurality of feature data and a target data, wherein the target data represents a continuous variable;
   - for each of the first data pairs:

      - calculating an estimated outcome based on the dynamic prediction model and the plurality of feature data, the estimated outcome being indicative of an estimated probability score associated with the set of possible actions;

      - determining a loss value based on the target data and the estimated outcome of each of the first data pairs;
   - modifying the learning-capable system by adjusting the dynamic prediction model such that the loss value is optimized.

2. Method according to any of the preceding claims, wherein the magnitude of the loss value is influenced by the magnitude of the target data of each of the first data pairs.

3. Method according to any of the preceding claims, wherein the loss value is based on a multiplication of the target data and the estimated outcome of each of the first data pairs.

4. Method according to any of the preceding claims, wherein the loss value is calculated as:

$$L = - \sum_i \tilde{p}_i r_i$$

   where $\tilde{p}_i$ is the estimated outcome for the i'th first data pair of the plurality of first data pairs, and $r_i$ is the target data for the i'th first data pair of the plurality of first data pairs.

5. Method according to any of the preceding claims, wherein obtaining the dynamic prediction model comprises assigning random or pseudo random values to each of the plurality of model coefficients, or wherein obtaining the dynamic prediction model comprises obtaining an adjusted prediction model, the adjusted prediction model being a result of training another learning-capable system.

6. Method according to any of the preceding claims, wherein the dynamic prediction model is a neural network comprising a plurality of nodes each node being defined by the model coefficients comprising weights and/or biases.

7. Method according to any of the preceding claims, wherein the plurality of feature data comprise historical values of a first variable from a first initial time to a first final time.

8. Method according to any of the preceding claims, wherein the plurality of feature data comprise historical values of a second variable from a second initial time to a second final time.

9. Method according to any of claims 7 or 8, wherein the target data comprises a value indicative of the value of the first variable at a first target time after the first final time and/or after the second final time.

10. Method for selecting one or more actions from a set of possible actions, the method comprising the steps of:

   - obtaining a learning-capable system trained in accordance with the method of any of the preceding claims;
   - obtaining an input data set, the input data set comprising a plurality of input data;
   - determining the model outcome based on the dynamic prediction model and the plurality of input data of the input data set;
   - selecting one or more actions from the set of possible actions based on the model outcome.

11. Method according to claim 10, wherein selecting the one or more actions from the set of possible actions comprises selecting the action from the set of possible actions being associated with the highest probability by the model outcome.

12. A learning-capable system configured to select an action from a set of possible actions, the system comprising a processing unit configured to:

   - obtain a dynamic prediction model comprising a plurality of model coefficients;
   - obtain a first data set, the first data set comprising a plurality of first data pairs, each first data pair comprising a plurality of feature data and a target data, wherein the target data represents a continuous variable;
   - for each of the first data pairs:

      - calculate an estimated outcome based on the dynamic prediction model and the plurality of feature data, the estimated outcome being indicative of an estimated probability score associated with the set of possible actions;

   - determine a loss value based on the target data and the estimated outcome of each of the first data pairs;
   - modify the learning-capable system by adjustment of the dynamic prediction model such that the loss value is optimized;

   and wherein the processing unit is further configured to:

   - obtain an input data set, the input data set comprising a plurality of input data;
   - determine a model outcome based on the dynamic prediction model and the plurality of input data, the model outcome being indicative of a probability score associated with the set of possible actions;
   - select a selected action from the set of possible actions based on the model outcome;
   - output the selected action.

13. Learning-capable system according to claim 12 comprising a display connected to the processing unit, and wherein the processing unit is configured to output the selected action to the display, the display being configured to display an indication of the selected action.

14. Learning-capable system according to any of claims 12 or 13, wherein the processing unit is configured to perform the selected action.

15. Learning-capable system according to any of claims 12-14, wherein the processing unit is configured to output the selected action to a system configured to perform the selected action.

100

102

104

106

108

110

# Fig. 1

**Fig. 2**

**Fig. 3**

**Fig. 4**

**Fig. 5**

Europäisches
Patentamt

European
Patent Office

Office européen
des brevets

**EUROPEAN SEARCH REPORT**

Application Number

EP 17 16 2939

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUE DENG ET AL: "Deep Direct Reinforcement Learning for Financial Signal Representation and Trading", IEEE TRANSACTIONS ON NEURAL NETWORKS AND LEARNING SYSTEMS, vol. 28, no. 3, 15 February 2016 (2016-02-15), pages 653-664, XP055407202, Piscataway, NJ, USA ISSN: 2162-237X, DOI: 10.1109/TNNLS.2016.2522401 * abstract; figures 1-4 * * paragraph [000I] - paragraph [III.B] * * Algorithm 1; paragraph [00IV] - paragraph [00IV] * | 1-15 | INV. G06N3/08 ADD. G06N3/04 |
| X | US 2015/100530 A1 (MNIH VOLODYMYR [GB] ET AL) 9 April 2015 (2015-04-09) * paragraph [0002] - paragraph [0004] * * paragraph [0010] - paragraph [0021] * * paragraph [0028] - paragraph [0033] * * paragraph [0037] - paragraph [0037] * * paragraph [0053] - paragraph [0053] * * abstract * | 1-15 | |
| X | US 6 735 580 B1 (LI LIANG [US] ET AL) 11 May 2004 (2004-05-11) * abstract; figures 2-6 * * column 1, line 8 - column 1, line 50 * * column 2 - column 2 * * column 3, line 26 - column 3, line 48 * * column 5, line 27 - column 5, line 64 * * column 6 - column 6 * | 1-15 | |

TECHNICAL FIELDS
SEARCHED    (IPC)

G06N
G06Q

-/--

The present search report has been drawn up for all claims

| Place of search | Date of completion of the search | Examiner |
|---|---|---|
| The Hague | 19 September 2017 | Cilia, Elisa |

EPO FORM 1503 03.82 (P04C01)

Europäisches
Patentamt

European
Patent Office

Office européen
des brevets

# EUROPEAN SEARCH REPORT

Application Number

EP 17 16 2939

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KATARZYNA JANOCHA ET AL: "On Loss Functions for Deep Neural Networks in Classification", ARXIV.ORG, CORNELL UNIVERSITY LIBRARY, 201 OLIN LIBRARY CORNELL UNIVERSITY ITHACA, NY 14853, 18 February 2017 (2017-02-18), XP080747618, * the whole document * | 1-15 | |
| A | SNEHA SONI: "Applications of ANNs in Stock Market Prediction: A Survey", INTERNATIONAL JOURNAL OF COMPUTER SCIENCE & ENGINEERING TECHNOLOGY (IJCSET), vol. 2, no. 3, 1 March 2011 (2011-03-01), pages 71-83, XP055407515, ISSN: 2229-3345 * the whole document * | 1-15 | |
| A | Tae-Hwy Lee: "Loss Functions in Time Series Forecasting", , 1 March 2007 (2007-03-01), pages 1-14, XP055407564, Retrieved from the Internet: URL:http://www.faculty.ucr.edu/~taelee/paper/lossfunctions.pdf [retrieved on 2017-09-18] * the whole document * | 1-15 | TECHNICAL FIELDS SEARCHED (IPC) |

The present search report has been drawn up for all claims

| Place of search | Date of completion of the search | Examiner |
|---|---|---|
| The Hague | 19 September 2017 | Cilia, Elisa |

EPO FORM 1503 03.82 (P04C01)

## ANNEX TO THE EUROPEAN SEARCH REPORT
## ON EUROPEAN PATENT APPLICATION NO.

EP 17 16 2939

19-09-2017

| Patent document cited in search report | | Publication date | Patent family member(s) | | Publication date |
|---|---|---|---|---|---|
| US 2015100530 | A1 | 09-04-2015 | CN | 105637540 A | 01-06-2016 |
| | | | EP | 3055813 A1 | 17-08-2016 |
| | | | US | 2015100530 A1 | 09-04-2015 |
| | | | WO | 2015054264 A1 | 16-04-2015 |
| US 6735580 | B1 | 11-05-2004 | NONE | | |

EPO FORM P0459